# EUROPÄISCHE PATENTSCHRIFT

(11) **EP 1 623 749 B1**
(45) Veröffentlichungstag und Bekanntmachung des Hinweises auf die Patenterteilung: **05.09.2007**
(21) Anmeldenummer: 05015179.4
(22) Anmeldetag: 13.07.2005
(51) Int. Cl.: B01D 35/16

(54) **Ölfilteranordnung**
Oil filter assembly
Agencement d'un filtre à huile

(30) Priorität: 01.08.2004 DE 102004038814; 13.05.2005 DE 102005022932
(43) Veröffentlichungstag der Anmeldung: 08.02.2006
(73) Patentinhaber: Joma-Polytec Kunststofftechnik GmbH, 72407 Bodelshausen (DE)
(72) Erfinder: Maute, Alexander, 72379 Hechingen-Stetten (DE); Pfitzer, Friedhelm, 72414 Rangendigen (DE); Jungmann, Peter, 72414 Rangendingen (DE); Heinz, Stefan, 72411 Bodelshausen (DE)
(74) Vertreter: Dreiss, Fuhlendorf, Steimle & Becker

(56) Entgegenhaltungen:
- EP-A- 0 839 563
- EP-A- 1 327 471
- DE-U1- 29 916 843
- PATENT ABSTRACTS OF JAPAN Bd. 2003, Nr. 12, 5. Dezember 2003 (2003-12-05) -& JP 2003 320206 A (TOYO ROKI MFG CO LTD), 11. November 2003 (2003-11-11)

## Beschreibung

Die Erfindung betrifft eine Ölfilteranordnung mit einem Gehäuse, das ein Aufnahmeraum für ein in das Gehäuse einsetzbares, radial mit Ö1 durchströmbares Filterelement aufweist und mit einem den Aufnahmeraum verschließenden Gehäusedeckel.

Aus dem Stand der Technik ist die DE 39 03 675 C2 bekannt, die eine ähnliche Filteranordnung zeigt.

Aus der JP 2003 320206 ist eine Ölfilteranordnung bekannt geworden, bei der am Boden des Aufnahmeraums ein Rotor vorgesehen ist, um bei Einschrauben des Gehäusedeckels ein Mitdrehen des Filterelements zu ermöglichen und eine ungewollte Torsion Filterelements des zu vermeiden.

Ferner ist aus dem Stand der Technik die DE 102 35 902 A1 bekannt, bei der am Boden des Aufnahmeraums eine von einem Rohrstutzen umgebene Reinölöffnung angeordnet. Ferner ist am Boden eine Ablassöffnung vorgesehen, die über ein an einer Federspange vorgesehenes Verschlussteil verschließbar ist. Bei eingesetztem Filterelement wird das Verschlussteil über die Federspange in die Schließposition bewegt. Bei Herausnehmen des Filterelements wird aufgrund der Eigenspannung der Federspange die Ablassöffnung geöffnet. Das Vorsehen eines Ablasskanals hat den Vorteil, dass vor dem vollständigen Herausnehmen des Filterelements Öl, das im Aufnahmeraum vorhanden ist, abfließen kann. Dadurch ergibt sich eine vereinfachte Handhabung des Filterelements und der Filterelementwechsel wird vereinfacht.

Der vorliegenden Erfindung liegt die Aufgabe zugrunde, einen derart bekannten Stand der Technik weiter zu bilden. Insbesondere soll die Funktions- und Betriebssicherheit der Ölfilteranordnung erhöht werden.

Die Erfindung sieht dazu vor, im Bodenbereich des Aufnahmeraums eine auf dem Rohrstutzen wenigstens bedingt axial verschiebbar angeordnete Drainageplatte mit einem Verschlussmittel anzuordnen, wobei zwischen der Drainageplatte und dem Boden wenigstens eine Druckfeder derart angeordnet ist, dass in der Betriebslage bei geschlossenem Gehäuse und eingesetztem Filterelement die Drainageplatte vom Filterelement entgegen der Federkraft beaufschlagt wird und das Verschlussmittel eine Drainageöffnung des Kanalraums verschließt. Gemäß der Erfindung wird folglich zum einen eine auf dem Rohrstutzen verschiebbar angeordnete Drainageplatte vorgesehen und zum anderen eine Druckfeder, die die Drainageplatte beaufschlagt. Die Drainageplatte sieht dabei einen zentralen Durchbruch vor, in den der Rohrstutzen eingreift. In der Betriebslage wirkt das Filterelement gegen die Drainageplatte, wodurch das Verschlussmittel die Drainageöffnung verschließt. Die Drainageplatte samt Verschlussmittel kann dabei aus einem Vergleichsverweise unnachgiebigen Material sein, wodurch hohe Kräfte zum Verschließen der Drainageöffnung bereit gestellt werden können. Beim Stand der Technik gemäß der DE 102 35 902 A1 hängt die Verschlusskraft von der Elastizität der Federspange ab, da die Federspange vom Filterelement zum Schließen des Ablasskanals beaufschlagt wird.

Erfindungsgemäß ist vorteilhaft, wenn die Drainageplatte beim Öffnen des Gehäusedeckels der Druckfeder aus der Betriebslage in eine Ablasslage gedrückt wird, in der die Drainageöffnung geöffnet wird. Das Öffnen der Drainageöffnung erfolgt dabei selbsttätig beim Herausnehmen des Filterelements. Besonders vorteilhaft ist, wenn die Druckfeder derart ausgelegt ist, dass beim Öffnen des Gehäusedeckels die Drainageplatte samt Filterelement aufgrund der entsprechend hohen Federkraft der Druckfeder angehoben wird. Dadurch wird ein Herausnehmen des Filterelements aus dem Aufnahmeraum wesentlich vereinfacht; das Filterelement kann dabei beispielsweise geringfügig aus dem Ausnahmeraum herausragen und kann folglich leichter entnommen werden.

Vorteilhaft ist, wenn die Drainageplatte wenigstens weitgehend senkrecht zur Mittellängsachse verschiebbar angeordnet ist. Die Drainageplatte wird vorteilhafterweise parallel zum Boden verschoben, wodurch ein sicheres Einführen bzw. Schließen der Drainageöffnung durch das Verschlussmittel erreicht werden kann. Ferner wird ein Verkanten der Drainageplatte am Rohrstutzen unterbunden.

Die Drainageplatte kann dabei vorteilhafterweise ringscheibenartig mit einem zentralen Durchbruch ausgebildet sein, wobei sie in Draufsicht insbesondere eine kreisrunde, ovale oder eiförmige Kontur haben kann.

An der Drainageplatte können ferner Stege zur Abstützung am Boden und/oder am Filterelement vorhanden sein. Hierdurch kann ein definiertes Beaufschlagen der Drainageplatte durch das Filterelement erreicht werden. Zudem kann eine Führung der Bewegung der Drainageplatte erzielt werden. Durch Vorsehen von Stegen am Boden können definierte Anschläge für die Drainageplatte bereit gestellt werden.

Um das Material des Gehäuses zu schonen, das insbesondere aus einem Kunststoff sein kann, kann am Boden des Aufnahmeraums zur Abstützung der Druckfeder eine Zwischenplatte oder Zwischenhülse angeordnet sein. Die Zwischenplatte oder Zwischenhülse kann dabei insbesondere aus einem metallischen Werkstoff sein.

Um ein ungewolltes Verdrehen der Drainageplatte um die Mittellängesachse des Aufnahmeraums zu vermeiden, können an der Drainageplatte und/oder am Rohrstutzen Mittel zur Verhinderung eines Verdrehens der Drainageplatte vorgesehen sein. Derartige Mittel können beispielsweise Führungsnuten oder Führungsstege an der Drainageplatte und/oder am Rohrstutzen sein.

Der Rohrstutzen kann insbesondere als gegenüber dem Filterelement nach radial innen zurückversetztes Staurohr ausgebildet sein, das in eine an der unteren Endseite des Filterelements vorhandene Öffnung dichtend eingreift. Durch ein derartiges Staurau wird verhindert, dass der Aufnahmeraum bei Öldruckabfall vollständig leer läuft.

Um den Bewegungsspielraum der Drainageplatte nach axial oben zu begrenzen, kann der Rohrstutzen nach radial außen ragende Überstände aufweisen. Die Überstände erstrecken sich dabei vorteilhafterweise wenigstens geringfügig weiter in die radiale Richtung, als der an der Drainageplatte vorgesehene zentrale Durchbruch für den Rohrstutzen. Je nach Ausbildung und Länge des Rohrstutzens können die nach radial außen ragende Überstände entweder am freien Ende des Rohrstutzens oder an einer geeigneten Stelle des Rohrstutzens vorgesehen sein.

Am Rohrstutzen können auch sich in axialer Richtung erstreckende Längsnutenabschnitte angeordnet sein, wobei die Drainageplatte dann nach radial innen ragende, in die Längsnuten eingreifende Überstände aufweist, um den Bewegungsspielraum der Drainageplatte nach axial oben zu begrenzen.

Gemäß der Erfindung kann auch vorgesehen sein, dass der Kanalraum nicht nur die Drainageöffnung eines Drainagekanals aufweist, sondern auch eine Rohölöffnung eines Rohölkanals, wobei das Verschlussmittel in der Betriebslage dann derart in den Kanalraum eingreift, dass die Drainageöffnung verschlossen und die Rohölöffnung offen ist. Eine derartige Ausführungsform hat den Vorteil, dass die Rohölöffnung sowie die Drainageöffnung in den gleichen Kanalraum münden und dass lediglich dieser eine Kanalraum in den Aufnahmeraum mündet.

Weitere Einzelheiten und vorteilhafte Ausgestaltung der Erfindung sind der nachfolgenden Beschreibung zu entnehmen, in der die Erfindung anhand der in der Zeichnung dargestellten Ausführungsformen der Erfindung näher beschrieben und erläutert ist.

Es zeigen:
- Figur 1: einen Längsschnitt durch eine erste Ausführungsform einer erfindungsgemäßen Ölfilteranordnung,
- Figur 2: einen Schnitt entlang der Linie II in der Figur 1,
- Figur 3: eine alternative Ausführungsform zur Figur 2 und
- Figur 4: einen Längsschnitt durch eine zweite Ausführungsform der Erfindung.

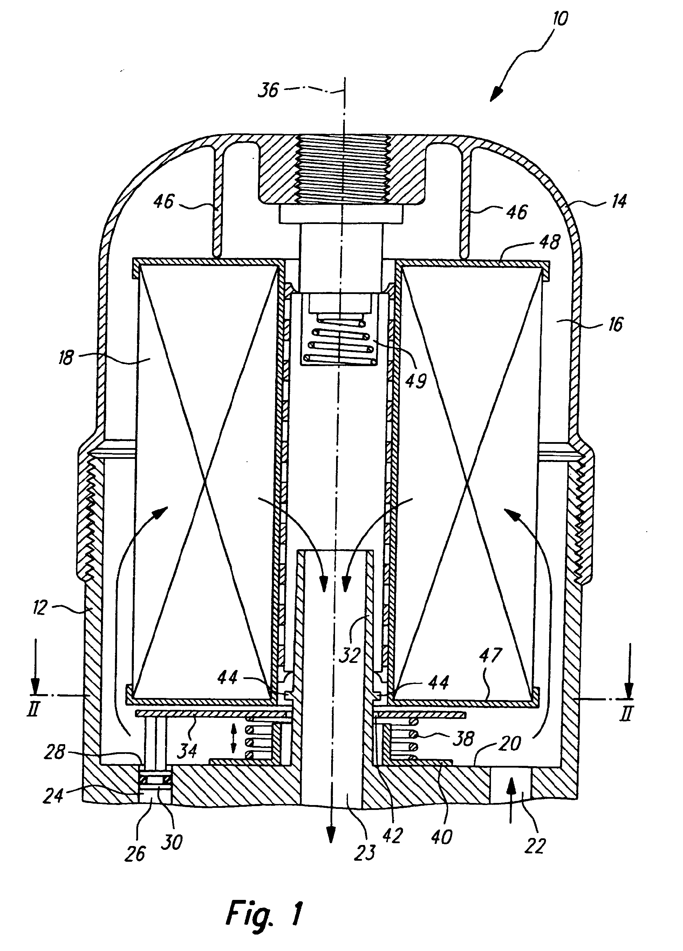

Die in der Figur 1 dargestellte Ölfilteranordnung 10 weist ein Gehäuse 12 und einen auf das Gehäuse 12 aufsetzbaren, insbesondere aufschraubbaren, Gehäusedeckel 14 auf. Das Gehäuse 12 sieht einen Aufnahmeraum 16 vor, in dem ein radial von außen nach innen durchströmbares Filterelement 18 angeordnet ist.

Am Boden 20 des Aufnahmeraums 16 ist eine Rohölöffnung 22 vorgesehen, durch die zu filterndes Rohöl in den Aufnahmeraum 16 einfließt. Ferner ist am Boden 20 ein als Drainagekanal 24 ausgebildeter Kanalraum 26 vorgesehen, über den im Aufnahmeraum 16 vorhandenes Ö1 bei Öffnen des Gehäusedeckels 14 bzw. bei Herausnahmen des Filterelements 18 abfließen kann. Der Drainagekanal 24 sieht dabei eine Drainageöffnung 28 vor. In der in der Figur 1 dargestellten Betriebslage der Filteranordnung mit geschlossenem Gehäuse und eingesetztem Filterelement 18 ist die Drainageöffnung 28 von einem Verschlussmittel 30 verschlossen.

Das Verschlussmittel 30 ist seinerseits an einer im Bodenbereich des Aufnahmeraums 16 auf einem Rohrstutzen 32 axial verschiebbaren Drainageplatte 34 angeordnet. Die Drainageplatte weist einen zentralen Durchbruch 42 auf, über den sie auf den Rohrstutzen 32 aufgesteckt ist. Die Drainageplatte ist dabei senkrecht zur Mittellängsachse 36 der Filteranordnung verschiebbar. Das zapfenartig ausgebildete Verschlussmittel 30 greift dabei in die Drainageöffnung 28, wobei sich der Drainagekanal 26 im Bereich der Drainageöffnung 28 parallel zur Mittellängsachse 36 erstreckt. Dadurch kann gewährleistet werden, dass unabhängig von der Eingriffstiefe des Verschlussmittels 30 in den Drainagekanal 24 ein sicheres Verschließen des Drainagekanals 24 erreicht werden kann. Die Drainageplatte 34 wird von einer Druckfeder 38 nach oben in Richtung des Gehäusedeckels 14 druckbeaufschlagt. Die Druckfeder 38 stützt sich einerseits an der Drainageplatte 34 und andererseits an einer am Boden 20 vorgesehenen Zwischenhülse 40 ab. Die Zwischenhülse 40 ist dabei in vorteilhafter Weise aus einem metallischen Werkstoff, wobei das Gehäuse 12 aus einem Kunststoff sein kann.

Aufgrund der Federbeaufschlagung der Drainageplatte 34 wird beim Abnehmen des Gehäusedeckels 14 die Drainageplatte nach axial oben bewegt, wodurch das Verschlussmittel 30 die Drainageöffnung 28 freigibt und das im Aufnahmeraum 16 vorhandene Ö1 über den Drainagekanal 24 abfließen kann. Die Druckfeder 38 ist dabei vorteilhafterweise derart ausgelegt, dass beim Abnehmen des Gehäusedeckels 14 nicht nur die Drainageplatte 34 angehoben wird, sondern auch das Filterelement 18 nach axial oben bewegt wird. Hierdurch wird ein Herausnehmen des Filterelements 18 aus dem Aufnahmeraum 16 erleichtert.

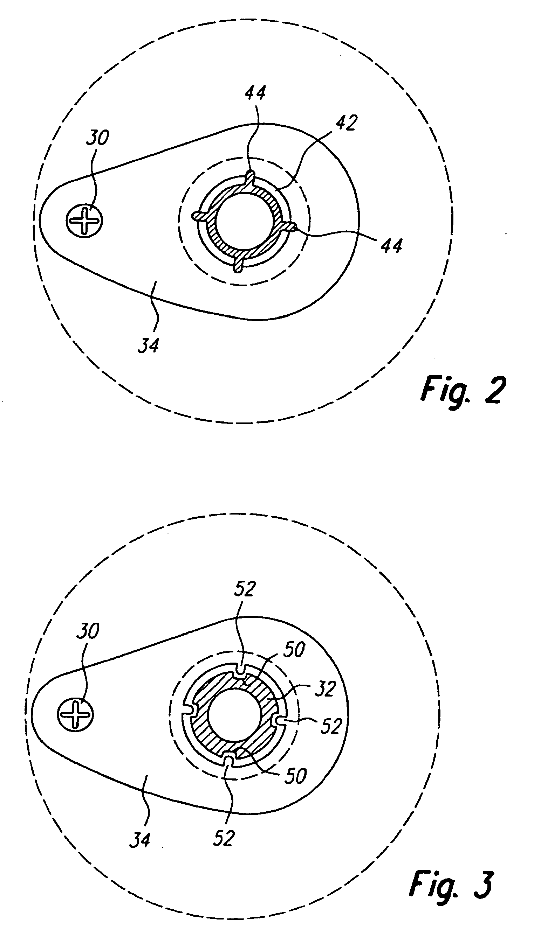

Zur verliersicheren Anordnung der Drainageplatte 34 am Rohrstutzen 32 sind am Rohrstutzen 32 nach radial außen gerichtete, nasenartige Überstände 44 vorgesehen. Die Überstände 44 überragen dabei wenigstens geringfügig den Durchbruch 42 in radialer Richtung. Dies wird insbesondere auch aus Figur 2 deutlich. Hierdurch wird verhindert, dass aufgrund der Federkraft der Druckfeder 38 ein ungewolltes Lösen der Drainageplatte 34 vom Rohrstutzen 32 erfolgen kann.

Um in der Betriebslage die untere Endseite 47 des Filterelements 18 gegen die Federkraft der Druckfeder 38 zu beaufschlagen, sind am Deckel 14 Stege 46 vorgesehen, die gegen die obere Endseite 48 des Filterelements 18 wirken. Am Deckel 14 oder am Filterelement 18 kann ein Bypassventil 49 vorgesehen sein, dass bei stark verschmutztem oder zugesetztem Filterelement aufgrund eines Druckanstiegs öffnet.

In der Figur 2 ist ein Schnitt entlang der Linie II der Figur 1 gezeigt, wobei lediglich die Drainageplatte 34 in Draufsicht dargestellt sowie einen Querschnitt durch den Rohrstutzen 32 mit den Überständen 44. Deutlich zu erkennen ist, dass die Überstände 44 in radialer Richtung über den zentralen Durchbruch 42 überstehen. Die Drainageplatte weist gemäß Figur 2 eine eiförmige Kontur auf. Die Drainageplatte kann erfindungsgemäß ebenso oval oder anders ausgebildet sein.

Die Figur 3 unterscheidet sich von der Figur 2 dadurch, dass der Rohrstutzen 32 in axialer Richtung verlaufende Nutabschnitte 50 aufweist, in die an der Drainageplatte nach radial innen gerichtete Vorsprünge 52 eingreifen. Aufgrund einer begrenzten Länge der Nutabschnitte 50 kann hierdurch die Bewegungsfreiheit der Drainageplatte 34 nach axiale oben begrenzt werden.

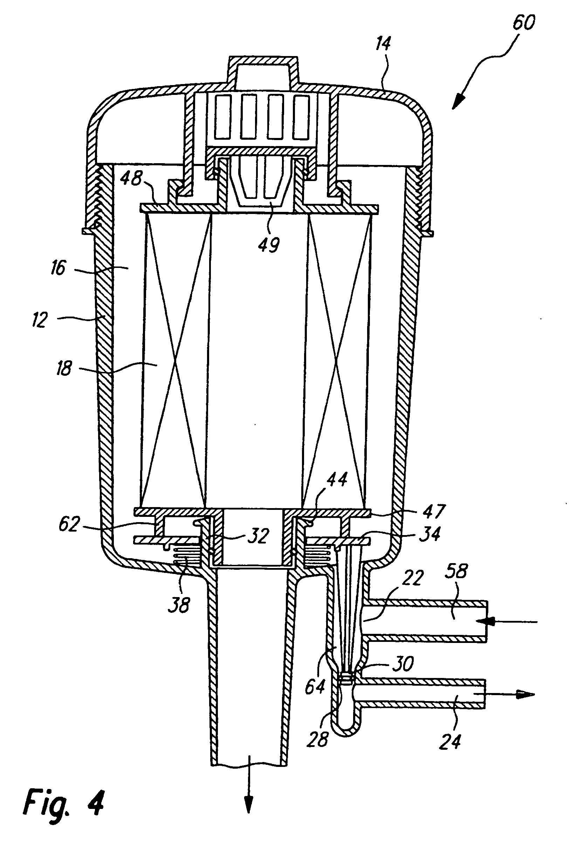

Bei der Ölfilteranordnung 60 gemäß Figur 4 sind der Ölfilteranordnung 10 entsprechende Bauteile mit entsprechenden Bezugszeichen gekennzeichnet.

Die Ölfilteranordnung 60 unterscheidet sich von der Ölfilteranordnung 10 dadurch, dass ein Kanalraum 64 vorgesehen ist, in den zum einen die Rohrölöffnung 22 des Rohrölkanals 58 mündet und zum anderen die Drainageöffnung 28 des Drainagekanals 24.

An der unteren Endplatte 47 des Filterelements 18 sind bei der Ausführungsform gemäß Figur 4 Stege 62 vorgesehen, die in der Figur 4 dargestellten Betriebslage die Drainageplatte 32 nach unten, gegen die Federkraft der sich am Gehäuseboden anstützenden Druckfeder 38 beaufschlagt. Das Verschlussmittel 30 verschließt dabei die Drainageöffnung 28 bzw. den Drainagekanal 24. Beim Abschrauben des Deckels 14 wird über die Druckfeder 38 die axial bewegbare Drainageplatte 32 samt Verschlussmittel 30 nach axial oben bewegt, wodurch die Drainageöffnung 30 geöffnet wird. Die Drainageplatte 32 ist dabei auf dem Rohrstutzen 32 axial verschiebbar gelagert; der Rohrstutzen 32 weist an seinem freien Ende nach radial außen ragenden Überstände 44 auf, die den Bewegungsspielraum der Drainageplatte nach axial oben begrenzen. Im Bereich 90 kann das Filterelement 18 mit deckelseitigen Stegen verrastet sein, oder auch nur axial geführt werden. Das Filterlement wird entweder zusammen mit dem Deckel aus dem Aufnahmeraum entnommen; oder ohne den Deckel, nach Herunternahme des Deckels.

Das Vorsehen der sich im wesentlichen senkrecht zur Mittellängsachse verschiebbaren Drainageplatte hat den Vorteil, dass das Verschlussmittel parallel zur Mittellängsachse in den Kanalraum 64 bzw. in die Drainageöffnung 28 eingreift. Die Drainageöffnung 28 hat dabei nicht unmittelbar im Bodenbereich des Aufnahmeraums 16 zu sein.

## Patentansprüche

1. Ölfilteranordnung (10, 60) mit einem Gehäuse (12), das einen Aufnahmeraum (16) für ein in das Gehäuse einsetzbares, radial mit Ö1 durchströmbares Filterelement (18) aufweist, und mit einem den Aufnahmeraum verschließenden Gehäusedeckel (14), wobei am Boden (20) des Aufnahmeraums (16) eine von einem Rohrstutzen (32) umgebene Reinöl- oder Rohölöffnung (23) und ein sich in Längsrichtung des Aufnahmeraums erstreckender Kanalraum (24, 26) vorgesehen ist, **dadurch gekennzeichnet, dass** im Bodenbereich des Aufnahmeraums (16) eine einen zentralen Durchbruch (42) und ein Verschlussmittel (30) aufweisende Drainageplatte (34) vorgesehen ist, wobei der Rohrstutzen (32) in den zentralen Durchbruch eingreift und die Drainageplatte (34) auf dem Rohrstutzen (32) wenigstens bedingt axial verschiebbar angeordnet ist, und wobei zwischen der Drainageplatte (34) und dem Boden wenigstens eine Druckfeder (38) derart angeordnet ist, dass in der Betriebslage bei geschlossenem Gehäuse und eingesetztem Filterelement (18) die Drainageplatte (38) vom Filterelement entgegen der Federkraft beaufschlagt wird und das Verschlussmittel (30) eine Drainageöffnung (28) des Kanalraums (24, 26) verschließt.

2. Ölfilteranordnung (10, 60) nach Anspruch 1, durch **gekennzeichnet**, **dass** das die Drainageplatte (34) beim Öffnen des Gehäusedeckels (14) von der Druckfeder (38) aus der Betriebslage in eine Ablasslage gedrückt wird, in der die Drainageöffnung (28) geöffnet ist.

3. Ölfilteranordnung (10, 60) nach Anspruch 2, **dadurch gekennzeichnet, dass** die Druckfeder (38) derart ausgelegt ist, dass beim Öffnen des Gehäusedeckels (14) die Drainageplatte (34) samt Filterelement (16) angehoben wird.

4. Ölfilteranordnung (10, 60) nach Anspruch 1, 2 oder 3, **dadurch gekennzeichnet, dass** die Drainageplatte (34) wenigstens weitgehend senkrecht zur Mittellängsachse (36) verschiebbar angeordnet ist.

5. Ölfilteranordnung (10, 60) nach einem der vorhergehenden Ansprüche, **dadurch gekennzeichnet, dass** die Drainageplatte (34) ringscheibenartig ausgebildet ist.

6. Ölfilteranordnung (10, 60) nach einem der vorhergehenden Ansprüche, **dadurch gekennzeichnet, dass** die Drainageplatte (34) Stege (62) zur Abstützung am Boden (20) und/oder am Filterelement aufweist

7. Ölfilteranordnung (10, 60) nach einem der vorhergehenden Ansprüche, **dadurch gekennzeichnet, dass** am Boden (20) zur Abstützung der Druckfeder eine Zwischenplatte oder Zwischenhülse (40) angeordnet ist.

8. Ölfilteranordnung (10, 60) nach einem der vorhergehenden Ansprüche, **dadurch gekennzeichnet, dass** an der Drainageplatte (34) und/oder am Rohrstutzen (32) Mittel zur Verhinderung eines Verdrehens der Drainageplatte (34) um die Mittellängsachse (36) vorgesehen sind.

9. Ölfilteranordnung (10, 60) nach einem der vorhergehenden Ansprüche, **dadurch gekennzeichnet, dass** der Rohrstutzen (32) als Staurohr ausgebildet ist und/oder in ein Öffnung am Filterelement (18) eingreift.

10. Ölfilteranordnung (10, 60) nach einem der vorhergehenden Ansprüche, **dadurch gekennzeichnet, dass** der Rohrstutzen (32) nach radial außen ragende Überstände (44) aufweist, die den Bewegungsspielraum der Drainageplatte (34) nach axial oben begrenzen.

11. Ölfilteranordnung (10, 60) nach einem der vorhergehenden Ansprüche, **dadurch gekennzeichnet, dass** am Rohrstutzen (32) sich in axialer Richtung erstreckende Längsnuten (50) angeordnet sind und dass die Drainageplatte nach radial innen ragende, in die Längsnuten eingreifende Überstände (52) aufweist, um den Bewegungsspielraum der Drainageplatte (34) nach axial oben zu begrenzen.

12. Ölfilteranordnung (10, 60) nach einem der vorhergehenden Ansprüche, **dadurch,gekennzeichnet, dass** der Kanalraum (64) nicht nur die Drainageöffnung (28) des Drainagekanals (24) aufweist sondern auch eine Rohölöffnung (22) eines Rohölkanals (58), wobei das Verschlussmittel (30) in der Betriebslage derart in den Kanalraum (64) eingreift, dass die Drainageöffnung (28) verschlossen und die Rohölöffnung (22) offen ist.

## Claims

1. Oil filter assembly (10, 60) with a housing (12) which has a receiving chamber (16) for a filter element (18) that can be inserted into the housing and through which oil can flow in a radial direction, and with a housing lid (14) that closes the receiving chamber, wherein a pure oil or unfiltered oil opening (23) that is surrounded by a pipe socket (32) and a channel chamber (24, 26) extending in the longitudinal direction of the receiving chamber are provided at the bottom (20) of the receiving chamber (16), **characterized in that** a drainage plate (34) is provided in the bottom area of the receiving chamber (16), which has a central opening (42) and a closing means (30), wherein the pipe socket (32) engages in the central opening and the drainage plate (34) is disposed on the pipe socket (32) such that it can be axially displaced at least to a limited degree, and wherein at least one pressure spring (38) is disposed between the drainage plate (34) and the bottom, such that, in the operating position when the housing is closed and the filter element (18) is inserted, the drainage plate (38) is loaded by the filter element against the spring force and the closing means (30) closes a drainage opening (28) of the channel chamber (24, 26).

2. Oil filter assembly (10, 60) according to claim 1, **characterized in that** by opening the housing lid (14), the drainage plate (34) is pressed by the pressure spring (38) out of the operating position into an outlet position in which the drainage opening (28) is open.

3. Oil filter assembly (10, 60) according to claim 2, **characterized in that** the pressure spring (38) is designed such that the drainage plate (34) including filter element (16) are lifted when the housing lid (14) is opened.

4. Oil filter assembly (10, 60) according to claim 1, 2, or 3, **characterized in that** the drainage plate (34) is disposed such that it can be displaced at least largely vertically with respect to the central longitudinal axis.

5. Oil filter assembly (10, 60) according to any one of the preceding claims, **characterized in that** the drainage plate (34) is designed like an annular disc.

6. Oil filter assembly (10, 60) according to any one of the preceding claims, **characterized in that** the drainage plate (34) has ribs (62) for support on the bottom (20) and/or on the filter element.

7. Oil filter assembly (10, 60) according to any one of the preceding claims, **characterized in that** an intermediate plate or intermediate sleeve (40) is provided at the bottom (20) for supporting the pressure spring.

8. Oil filter assembly (10, 60) according to any one of the preceding claims, **characterized in that** means are provided on the drainage plate (34) and/or on the pipe socket (32) for preventing rotation of the drainage plate (34) about the central longitudinal axis (36).

9. Oil filter assembly (10, 60) according to any one of the preceding claims, **characterized in that** the pipe socket (32) is designed as impact tube and/or engages in an opening on the filter element (18).

10. Oil filter assembly (10, 60) according to any one of the preceding claims, **characterized in that** the pipe socket (32) has projections (44) that project in a radially outward direction and delimit the motion play of the drainage plate (34) in an axially upward direction.

11. Oil filter assembly (10, 60) according to any one of the preceding claims, **characterized in that** longitudinal grooves (50) that extend in an axial direction are disposed on the pipe socket (32) and the drainage plate has projections (52) which project in a radially inward direction and engage in the longitudinal grooves in order to delimit the motion play of the drainage plate (34) in an axial upward direction.

12. Oil filter assembly (10, 60) according to any one of the preceding claims, **characterized in that** the channel chamber (64) has the drainage opening (28) of the drainage channel (24) and also an unfiltered oil opening (22) of an unfiltered oil channel (58), wherein the closing means (30) engages in the channel chamber (64) in the operating position, such that the drainage opening (28) is closed and the unfiltered oil opening (22) is open.

## Revendications

1. Système de filtre à huile (10, 60) avec un boîtier (12), qui comporte un logement (16) pour un élément filtrant (18) apte à être inséré dans le boîtier et apte à être traversé dans le sens radial par l'huile, et avec un couvercle de boîtier (14) fermant le logement, sachant que dans le fond (20) du logement (16) sont prévus un orifice d'huile pure ou d'huile brute, entouré par une tubulure (32), et un conduit (24, 26) orienté dans le sens longitudinal du logement, **caractérisé en ce que** dans la zone du fond du logement (16) est prévue une plaque de drainage (34) qui comporte un passage (42) central et un moyen de fermeture (30), la tubulure (32) s'engageant dans le passage (42) central et la plaque de drainage (34) étant agencée sur la tubulure (32) de manière à pouvoir coulisser dans le sens axial, au moins dans certaines limites, et au moins un ressort de pression (38) étant agencé entre la plaque de drainage (34) et le fond, de telle sorte que, dans la position de service, lorsque le boîtier est fermé et que l'élément filtrant (18) est inséré, la plaque de drainage (34) est sollicitée par l'élément filtrant (18) dans le sens opposé à la force du ressort et le moyen de fermeture (30) obture un orifice de drainage (28) du conduit (24, 26).

2. Système de filtre à huile (10, 60) selon la revendication 1, **caractérisé en ce que** la plaque de drainage (34), au moment de l'ouverture du couvercle de boîtier (14), est poussée par le ressort de pression (38) hors de la position de service dans une position de purge, dans laquelle l'orifice de drainage (28) est ouvert.

3. Système de filtre à huile (10, 60) selon la revendication 2, **caractérisé en ce que** le ressort de pression (38) est dimensionné de telle sorte que, au moment de l'ouverture du couvercle de boîtier (14), la plaque de drainage (34) est soulevée avec l'élément filtrant (18).

4. Système de filtre à huile (10, 60) selon la revendication 1, 2 ou 3, **caractérisé en ce que** la plaque de drainage (34) est agencée mobile au moins en grande partie perpendiculairement à l'axe médian longitudinal (36).

5. Système de filtre à huile (10, 60) selon l'une quelconque des revendications précédentes, **caractérisé en ce que** la plaque de drainage (34) est réalisée en forme de plaque annulaire.

6. Système de filtre à huile (10, 60) selon l'une quelconque des revendications précédentes, **caractérisé en ce que** la plaque de drainage (34) comporte des nervures (62) pour prendre appui sur le fond (20) et/ou sur l'élément filtrant.

7. Système de filtre à huile (10, 60) selon l'une quelconque des revendications précédentes, **caractérisé en ce qu'**une plaque intermédiaire ou un manchon intermédiaire (40) est agencé sur le fond (20) pour supporter le ressort de pression.

8. Système de filtre à huile (10, 60) selon l'une quelconque des revendications précédentes, **caractérisé en ce que** des moyens destinés à empêcher une rotation de la plaque de drainage (34) autour de l'axe médian longitudinal (36) sont prévus sur la plaque de drainage (34) et/ou sur la tubulure (32).

9. Système de filtre à huile (10, 60) selon l'une quelconque des revendications précédentes, **caractérisé en ce que** la tubulure (32) est réalisée sous forme de tube de retenue et/ou s'engage dans un orifice sur l'élément filtrant (18).

10. Système de filtre à huile (10, 60) selon l'une quelconque des revendications précédentes, **caractérisé en ce que** la tubulure (32) comporte des saillies (44) qui s'avancent dans le sens radial vers l'extérieur et limitent dans le sens axial vers le haut le jeu de mouvement de la plaque de drainage (34).

11. Système de filtre à huile (10, 60) selon l'une quelconque des revendications précédentes, **caractérisé en ce que** des rainures longitudinales (50) orientées dans le sens axial sont agencées sur la tubulure (32) et **en ce que** la plaque de drainage (34) comporte des saillies (52) qui s'avancent dans le sens radial vers l'intérieur et s'engagent dans les rainures longitudinales, afin de limiter dans le sens axial vers le haut le jeu de mouvement de la plaque de drainage (34).

12. Système de filtre à huile (10, 60) selon l'une quelconque des revendications précédentes, **caractérisé en ce que** le conduit (64) comporte non seulement l'orifice de drainage (28) du conduit de drainage (24), mais aussi un orifice d'huile brute (22) d'un conduit d'huile brute (58), sachant que, dans la position de service, le moyen de fermeture (30) s'engage dans le conduit (64) de telle sorte que l'orifice de drainage (28) est obturé et l'orifice d'huile brute (22) est ouvert.
